Europäisches Patentamt

(19) European Patent Office

Office européen des brevets

(11) Veröffentlichungsnummer: **0 048 716**
**B1**

(12) **EUROPÄISCHE PATENTSCHRIFT**

(45) Veröffentlichungstag der Patentschrift:
21.12.83

(51) Int. Cl.³: **H 01 S 3/083**

(21) Anmeldenummer: **81900442.5**

(22) Anmeldetag: **24.01.81**

(86) Internationale Anmeldenummer:
**PCT/DE 81/00021**

(87) Internationale Veröffentlichungsnummer:
**WO 81/02952 (15.10.81 Gazette 81/24)**

(54) **LASERANORDNUNG.**

(30) Priorität: **05.04.80 DE 3013300**
**05.04.80 DE 3013301**

(43) Veröffentlichungstag der Anmeldung:
**07.04.82 Patentblatt 82/14**

(45) Bekanntmachung des Hinweises auf die Patenterteilung:
**21.12.83 Patentblatt 83/51**

(84) Benannte Vertragsstaaten:
**FR GB NL SE**

(56) Entgegenhaltungen:
**EP - A - 0 001 032**
**US - A - 3 753 147**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **KARNING, Heinrich, Albert-Fritz-Strasse 6, D-6900 Heidelberg (DE)**
Erfinder: **PREIN, Franz, Tulpenweg 3, D-6901 Waldhilsbach (DE)**
Erfinder: **VIERLING, Karl-Heinz, Johann-Sebastian-Bach-Strasse 46, D-6901 Bammental (DE)**

(74) Vertreter: **Muschka, Wilhelm, ELTRO GMBH GESELLSCHAFT FÜR STRAHLUNGSTECHNIK Kurpfalzring 106 Postfach 10 21 20, D-6900 Heidelberg 1 (DE)**

## Laseranordnung

Die Erfindung betrifft eine Laseranordnung, bestehend aus einem von einem Gehäuse umgebenen Resonatorraum mit einem Elektrodensystem, das in eine Mittelelektrode mit zwei der elektrischen Entladung dienende Oberflächen und zwei diesen Flächen gegenüberliegende Außenelektroden aufgegliedert ist, wobei durch die Elektrodenanordnung zwei Resonatorachsen definiert werden und wobei vier optische Elemente vorgesehen sind, von denen wenigstens eines teildurchlässig ist, die an den Gehäusestirnseiten in Höhe der Freiräume zwischen den Elektroden den Laserstrahl in Richtung auf die jeweils andere Resonatorachse umlenken oder den Laserstrahl auskoppeln, wobei die umlenkenden optischen Elemente unter einem Winkel zum Strahlenverlauf angeordnet sind.

Eine solche Laseranordnung wird z. B. in der DE-OS 2 753 304 behandelt. Grundsätzlich kann jedes der optischen Elemente — bei entsprechender Ausbildung — zum Auskoppeln des Laserstrahles verwendet werden. Wird es z. B. als wellenlängenselektiver Spiegel ausgebildet, so kann jeder Spiegel einen Laserstrahl auskoppeln, der in der Wellenlänge von den an den anderen Spiegeln ausgekoppelten Laserstrahlen verschieden ist. Die bevorzugte Ringlaserform ist jedoch ein sogenannter »Unstable Resonator« mit nur einem Auskoppelspiegel, wie er in JOURNAL OF APPLIED PHYSICS, Vol. 42/8 vom Juli 1971, Seiten 3133 bis 3137, in dem Fachaufsatz »$CO_2$ Regenerative Ring Power Amplifiers« von C. J. Buczek, R. J. Freiberg und M. L. Skolnick dargestellt und beschrieben ist. Auch der Fachzeitschrift ELEKTRONIK 1978, Heft 12, Seiten 85 ff., in dem Aufsatz »Der Ringlaser — ein neues Konzept für Farbstofflaser« von Günter Hummelt, sind nähere Angaben über Ringlaser zu entnehmen. Ein Oszillator-Laser-Verstärker dagegen ist in »Applied Physics Letters«, Vol. 24, No. 7, vom 1. April 1974, Seiten 306/7, und in dem Fachaufsatz »Generation of bandwidth-limited pulses form a TEA $CO_2$ laser using p-type germanium« von A. F. Gibson, M. F. Kimmitt und B. Norris, behandelt.

Die Aufgabe der Erfindung besteht in der Leistungssteigerung des gattungsgemäßen Lasers für wenigstens eine Wellenlänge. Diese Aufgabe wird erfindungsgemäß dadurch gelöst, daß die vier optischen Elemente den Laserstrahl nach Art eines Ringlasers auf die ihnen jeweils gegenüberliegenden optischen Elemente lenken. Durch die günstige Ausnutzung des aktiven Mediums wird ein schneller Anstieg der Verstärkung und bei Ausbildung als unstabiler Resonator eine hohe Energieausbeute im Mono-Mode-Betrieb, d. h. also ein relativ großer Wirkungsgrad, erzielt. Obgleich hierbei Anordnung der optischen Umlenkelemente unter 45° zum Strahlenverlauf die Regel ist, so daß der Strahlenverlauf äußerlich Rechteckform besitzt, können prinzipiell auch andere Winkel zur Anwendung gelangen, sofern der Auskoppelmechanismus dies erfordert. So ist es u. a. z. B. denkbar, daß jeweils die in der Diagonale einander gegenüberliegenden optischen Elemente mit dem Strahlenverlauf denselben Winkel einschließen.

Eine Weiterbildung der Erfindung sieht vor, daß für eine Verwendung von zwei oder mehreren Wellenlängen und bei entsprechend aufgegliederten Elektroden die optischen Elemente um eine zur waagerechten Gerätehauptebene senkrechte Achse dergestalt verschwenkbar sind, daß jeder Freiraum zwischen den Elektroden einer anderen Wellenlänge zugeordnet ist. Auf diese Weise erhält man einen Zwei- oder Mehrwellenlängenlaser mit synchron zueinander erzeugten Wellenzügen. Das Aufgliedern der Elektroden ist hierbei so zu verstehen, daß durch ein Verkleinern der Breite der Elektroden bei gleichbleibendem Entladungsvolumen und dadurch nahezu unveränderter Leistung der Resonatorraum praktisch in beliebig viele, zueinander parallele Strahlengänge aufgefächert werden kann. Die einfachste Auffächerung ist diejenige mit zwei Strahlengängen, die sich durch eine Mittelelektrode und ihr an zwei wirksamen Oberflächen gegenüberliegende Außenelektroden ergibt. Sowohl diese sowie komplizierte Auffächerungen sind in der eingangs angeführten Offenlegungsschrift näher erläutert. Im anstehenden Zusammenhang kann es bei weit auseinanderliegenden Wellenlängen sinnvoll sein, die den jeweiligen Wellenlängen $\lambda$ zugeordneten Flächen oder Flächenbereiche der optischen Elemente als Gitter auszubilden und mit unterschiedlichen Gitterkonstanten zu versehen.

Um eine inhomogene Energieverteilung im Strahl korrigieren bzw. homogen machen zu können, sind die optischen Elemente austauschbar und weisen eine von der planen Oberfläche abweichende und den jeweiligen Bedürfnissen entsprechend angepaßte — z. B. zylindrische oder asphärische — Formgebung auf. Die optischen Flächen lassen sich in der Regel nicht von vornherein angeben, sondern jede einzelne kann gezielt ausgewählt sowie in dem System erprobt und festgelegt werden. Die Anwendung ist z. B. bei einem Laser vorstellbar, bei dem ein Teilstrahl ausgekoppelt und auf seine optische Qualität, d. h. im wesentlichen auf seine homogene Intensitätsverteilung hin, überprüft sowie mittels adaptiven optischen Elementen ausgeregelt wird. Dieser Vorgang läßt sich auch automatisieren.

Eine andere Weiterbildung der Erfindung sieht vor, daß die Stirnseiten des Gehäuses als optische Elemente mit total und/oder teilreflektierenden Eigenschaften ausgebildet sind und aus Quarz, Glas, Glaskeramik, Keramik, Kunststoff, Germanium, Cadmiumtellurid oder Zinkselenid bestehen können. Eine solche Kopplung von Spiegeln unterliegt nur in geringer Weise Temperatureinflüssen und kennt keine gegenseitigen Justageprobleme. Dabei ist es zweckmäßig, daß zumindest je ein totalreflektierender Bereich und ein ausreichend durchlässiger Bereich an der dem Resonator zugekehrten Seite der Gehäusestirnwand vorgesehen oder in die Gehäusestirnwand eingearbeitet ist, die bedarfsweise durch Begrenzung des reflektierenden Bereichs als Modenblende ausgebildet ist. In diesem Fall ergibt sich der Vorteil, daß man ein der Strahlenbegrenzung dienliches Element, das ansonsten erforderlich wäre, einspart. Total- oder Teiltransparenz setzen eine entsprechende Vergütung voraus: In der Praxis hat es sich als vorteilhaft erwiesen, den totalreflektierenden Bereich in Form einer z. B. aus einer metallischen Schicht (Gold) oder einer dielektrischen Schicht bestehenden Reflexschicht aufzudampfen und für den durchlässigen Bereich transparentes Material zu wählen oder aber letzteres wenigstens teilweise durch ein durchgehendes Loch zu ersetzen. Eine solche mit starr zueinander justierten optischen Flächen bestückte Platte ist auch für andere Laser wie Festkörper-, gepulste Gas-, Dauerstrichlaser usw. verwertbar, so daß hierfür Elementenschutz begehrt wird.

Was einen Teil der totalreflektierenden optischen Elemente anbetrifft, so können dieselben, sofern sie auf derselben Stirnseite liegen, durch einen Prismenblock oder einen Tripelspiegel ersetzt werden. Im Fall des Tripelspiegels ist es von Vorteil, wenn er stirnseitig mit dem Strahlengang ausgesetzten flächigen Bereichen und aus dem Strahlengang herausgehaltenen Kanten angeordnet ist. Zum Abstimmen der Resonatorlänge ist es darüber hinaus sinnvoll, daß die optischen Elemente und/oder die ihrer Halterung dienenden Stirnseiten mit Hilfe eines Piezoantriebs verstellbar ausgebildet sind. Die Verstellrichtung verläuft jeweils senkrecht zur Ebene der Elemente bzw. Seiten.

Ein weiteres Merkmal der Erfindung sieht vor, daß in den Strahlengang zweier ausgekoppelter Strahlen unterschiedlicher Wellenlänge $\lambda_1$, $\lambda_2$ bedarfsweise ein gemeinsamer optischer Kristall — z. B. Germanium oder CdTe — zur Erzeugung eines weiteren Strahls mit unterschiedlicher Wellenlänge $\lambda_3$ gekoppelt sein kann.

Im folgenden werden an Hand einer Zeichnung Ausführungsbeispiele der Erfindung näher erläutert, wobei die in den einzelnen Figuren einander entsprechenden Teile dieselben Bezugszahlen aufweisen. Es zeigt

Fig. 1 den Längsschnitt durch einen Ringlaser, mit zwei Strahlengängen, unter 45° zu ihnen angeordneten Umlenkmitteln und zwei Auskoppelstellen,

Fig. 2 einen Ringlaser gemäß Fig. 1 mit vier Strahlengängen und entsprechend vielen Auskoppelstellen,

Fig. 3 einen Ringlaser gemäß Fig. 1 mit unter zwei verschiedenen Winkeln angeordneten, den Strahlenverlauf nach Art eines Parallelogramms bewirkenden Umlenkmitteln,

Fig. 4 eine als Prismenblock ausgebildete Gehäusestirnwand — in Seitenansicht und

Fig. 5 eine Stirnfläche des Gehäuses, bei der die totalreflektierenden Spiegel durch einen Tripelspiegel ersetzt sind.

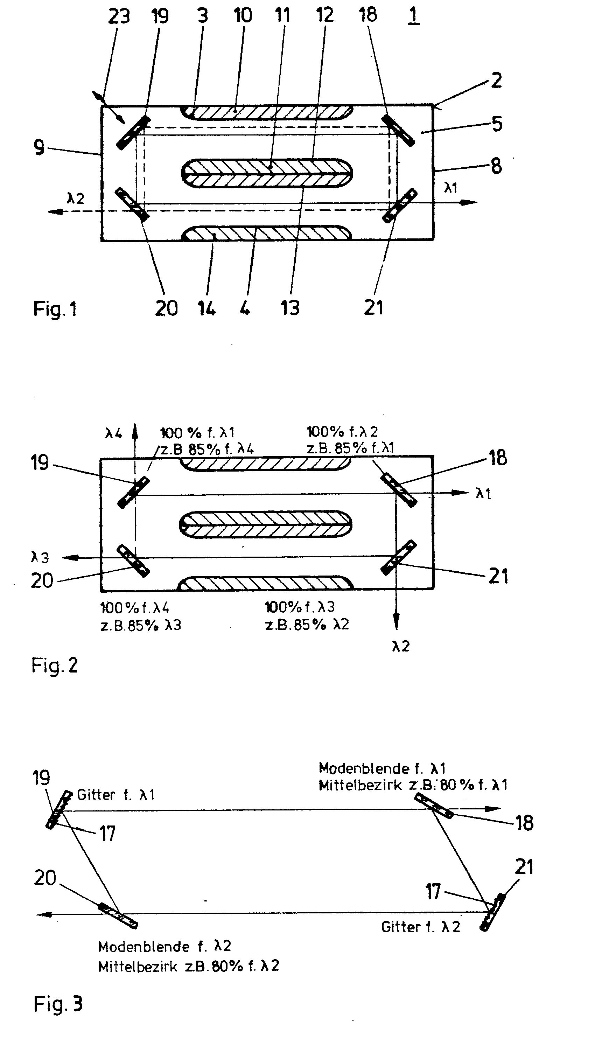

Die Grundanordnung gemäß Fig. 1 zeigt den Laser 1, dessen Gehäuse 2 den Resonator- oder Entladungsraum 5 umgibt, in dem das Elektrodensystem 10 bis 14 angeordnet ist. Die beiden Stirnwände 8 und 9 des Gehäuses dienen im wesentlichen der Halterung der Spiegel 18 bis 21. Das mit einer nach außen führenden Spannungszuführung versehene Elektrodensystem 10 bis 14 besteht aus der in der Längsachse des Gehäuses 2 angeordneten Mittelelektrode 11, die an ihrer Außenkontur zwei in entgegengesetzte Richtungen weisende Entladungsflächen 12 und 13 besitzt, die jeweils mit einer ihr im Bereich der inneren Längswand des Gehäuses gegenüberliegenden Elektrode 10 bzw. 14 bzw. deren Entladungsflächen 3 und 4 zusammenwirken.

In Höhe der Freiräume zwischen den Elektroden sind an den Stirnwänden 8 und 9 — im Fall des mit ausgezogener Linie gezeichneten Strahls der Wellenlänge $\lambda_1$ — die drei totalreflektierenden optischen Elemente 18 bis 20, z. B. Spiegel, und das teildurchlässige optische Element 21, das ebenfalls ein entsprechend ausgebildeter Spiegel sein kann, befestigt. Die Spiegelflächen sind dabei einander zugekehrt und jeweils unter 45° zum Strahlenverlauf angeordnet. Wird das Gas im Resonatorraum angeregt, so entsteht nach der Emission einer der ausgezogenenen Linie entsprechender sogenannter Ringlaser, der durch den teildurchlässigen Spiegel 21 ausgekoppelt wird. Bei einem Ringlaser mit zwei Wellenlängen $\lambda_1$ und $\lambda_2$ muß für den Vorgang der Auskopplung ein weiterer totalreflektierender Spiegel, z. B. der Spiegel 20, durch einen teildurchlässigen Spiegel ersetzt werden. Ein Ausführungsbeispiel mit vier verschiedenen auskoppelbaren Wellenlängen $\lambda_1$ bis $\lambda_4$ ist in F i g. 2 aufgezeigt. Die Transmission beträgt hier jeweils 85% und die Reflexion 15%. Selbstverständlich können die Prozentanteile von Transmission und Reflexion in anderen Ausführungsbeispielen auch anders — z. B. bei den vier optischen Elementen auch untereinander differierend — ausgebildet sein.

Das Verstellen der optischen Elemente und/oder der sie tragenden Seitenwände erfolgt mit Hilfe des Piezoantriebs 23, und zwar jeweils senkrecht zur Ebene dieser Elemente bzw. Seiten.

In dem Ausführungsbeispiel der Fig. 3 bildet der Strahlenverlauf ein Parallelogramm. Dies kommt zustande, weil jeweils nur die in der Diagonale einander gegenüberliegenden Spiegel 18 und 20 sowie 19 und 21 bzw. deren Gitter 17 mit dem Strahlenverlauf denselben Winkel bilden. Hier wird Laserstrahlung mit den unterschiedlichen Wellenlängen $\lambda_1$ und $\lambda_2$ über die in diesem Fall zu 80% durchlässigen Spiegel 18 und 20 ausgekoppelt.

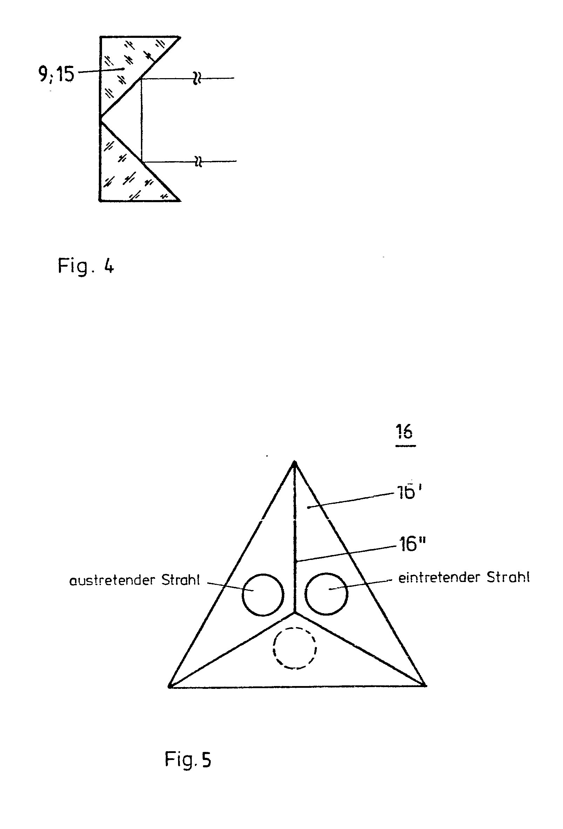

Fig. 4 zeigt eine der Stirnseiten 8 und 9 des Gehäuses 2 für sich gezeichnet. Sie kann aus Glas, Glaskeramik, Keramik, Quarzgut, Kunststoff, Germanium, CdTe oder Zinkselenid bestehen und total- und/oder teilreflektierend ausgebildet sein. Je nach Laserart können etwa 10 bis 90% der Fläche auf einen den Strahl auskoppelnden durchlässigen Bereich entfallen. Bei einem anderen, zeichnerisch nicht dargestellten Ausführungsbeispiel, ist kein dermaßen durchlässiger Bereich vorgesehen; dann muß dieser Bereich transparent sein und geringe Absorption besitzen. Es ist auch denkbar, die ganze Stirnwand aus transparentem Material zu fertigen und nur die Stelle, an der die Totalreflexion erwünscht ist, entsprechend auszubilden. Die Befestigung dieser totalreflektierenden Stelle kann z. B. durch Aufdampfen einer Goldschicht erfolgen. Ebensogut können auch die totalreflektierenden Bereiche und die (teil-)durchlässigen Schichten in der Gehäusestirnwand eingelassen sein, die dann als Modenblende verwendet werden kann.

Die totalreflektierenden optischen Elemente der Stirnwand 9 können als Prismenblock 15 (Fig. 4) oder Tripelspiegel 16 (Fig. 5) ausgebildet sein, wobei letzterer so in den Strahlengang eingefügt wird, daß nur seine flächigen Bereiche 16', nicht dagegen seine Prismenkante 16″ optisch wirksam sind.

## Patentansprüche

1. Laseranordnung, bestehend aus einem von einem Gehäuse (2) umgebenen Resonatorraum (5) mit einem Elektrodensystem, das in eine Mittelelektrode (11) mit zwei der elektrischen Entladung dienenden Oberflächen (12, 13) und zwei diesen Flächen gegenüberliegenden Außenelektroden aufgegliedert ist, wobei durch die Elektrodenanordnung zwei Resonatorachsen definiert werden und wobei vier optische Elemente (18 − 21) vorgesehen sind, von denen wenigstens eines teildurchlässig ist, die an den Gehäusestirnseiten (8, 9) in Höhe der Freiräume zwischen den Elektroden den Laserstrahl in Richtung auf die jeweils andere Resonatorachse umlenken oder den Laserstrahl auskoppeln, wobei die umlenkenden optischen Elemente unter einem Winkel zum Strahlenverlauf angeordnet sind, dadurch gekennzeichnet, daß die vier optischen Elemente (18 bis 21) den Laserstrahl nach Art eines Ringlasers auf die ihnen jeweils gegenüberliegenden optischen Elemente lenken.

2. Laseranordnung nach Anspruch 1, dadurch gekennzeichnet, daß jeweils die in der Diagonale einander gegenüberliegenden optischen Elemente (18; 20 bzw. 19; 21) mit dem Strahlenverlauf denselben Winkel einschließen (Fig. 3).

3. Laseranordnung nach Anspruch 1 oder 2, dadurch gekennzeichnet, daß für eine Verwendung von zwei oder mehreren Wellenlängen und bei entsprechend aufgegliederten Elektroden (10 bis 14) die optischen Elemente (18 bis 21) um eine zur waagrechten Gerätehauptebene senkrechte Achse dergestalt verschwenkbar angeordnet sind, daß jeder Freiraum zwischen den Elektroden einer anderen Wellenlänge $\lambda$ zugeordnet ist (Fig. 3).

4. Laseranordnung nach einem der Ansprüche 1 bis 3, dadurch gekennzeichnet, daß die den jeweiligen Wellenlängen $\lambda$ zugeordneten Flächen oder Flächenbereiche der optischen Elemente (19; 20) bei vergleichsweise weit auseinanderliegenden Wellenlängen als Gitter (17) ausgebildet und mit unterschiedlichen Gitterkonstanten versehen sind (Fig. 3).

5. Laseranordnung nach einem der Ansprüche 1 bis 4, dadurch gekennzeichnet, daß die optischen Elemente (18 bis 21) austauschbar angeordnet sind und eine von der planen Oberfläche den jeweiligen Bedürfnissen entsprechend abweichende − z. B. zylindrische oder asphärische − Formgebung aufweisen.

6. Laseranordnung nach einem der Ansprüche 1 bis 5, dadurch gekennzeichnet, daß die Stirnseiten (8; 9) des Gehäuses (2) als optische Elemente mit total- und/oder teilreflektierenden Eigenschaften ausgebildet sind und aus Quarz, Glas, Keramik, Kunststoff, Germanium, Cadmiumtellurid oder Zinkselenid bestehen.

7. Laseranordnung nach Anspruch 1 oder 6, dadurch gekennzeichnet, daß zumindest je ein totalreflektierender Bereich und ein ausreichend durchlässiger Bereich an der dem Resonator (5) zugekehrten Seite der Gehäusestirnwand (8) vorgesehen oder in die Gehäusestirnwand eingearbeitet ist, die bedarfsweise durch Begrenzung des reflektierenden Bereichs als Modenblende ausgebildet ist.

8. Laseranordnung nach Anspruch 1 und 7, dadurch gekennzeichnet, daß der totalreflektierende Bereich in Form einer Reflexschicht aufgedampft ist oder aus einer metallischen Schicht − z. B. Gold − oder einer dielektrischen Schicht besteht, während der durchlässige Bereich aus einem transparenten Material geringer Absorption und/oder einem durchgehenden Loch besteht.

9. Laseranordnung nach einem der Ansprüche 1 bis 8, dadurch gekennzeichnet, daß zwei der totalreflektierenden optischen Elemente (19; 20) der einen Stirnseite (9) als Prismenblock (15) oder Tripelspiegel (16) ausgebildet sind (Fig. 4 und 5).

10. Laseranordnung nach Anspruch 9, dadurch gekennzeichnet, daß der Tripelspiegel stirnseitig mit dem Strahlengang ausgesetzten flächigen Bereichen (16') und aus dem Strahlengang herausgehaltenen Kanten (16″) angeordnet ist (Fig. 5).

11. Laseranordnung nach einem der Ansprüche 1 bis 10, dadurch gekennzeichnet, daß die optischen Elemente (18 bis 21) und/oder die ihrer Halterung dienenden Stirnseiten (8; 9) mit Hilfe eines Piezoantriebs (23) verstellbar ausgebildet sind (Fig. 1).

12. Laseranordnung nach einem der Ansprüche 3 bis 11, dadurch gekennzeichnet, daß in den Strahlengang zweier ausgekoppelter Strahlen unterschiedlicher Wellenlänge $\lambda_1$, $\lambda_2$ ein gemeinsamer, einen weiteren Strahl unterschiedlicher Wellenlänge $\lambda_3$ erzeugender optischer Kristall (22) — z. B. Germanium oder CdTe — gekoppelt ist.

## Claims

1. Laser arrangement comprising a resonator chamber (5) surrounded by a housing (2) and having an electrode system sub-divided into a middle electrode (12) having two surfaces (12, 13) for electric discharge and outer electrodes facing these two surfaces, the electrode arrangement defining two resonator axes and there being provided four optical elements (18 — 21) at least one of which is partly transparent, which optical elements deflect the laser beam at the housing end faces (8, 9) at the level of the free spaces between the electrodes to whichever is the other resonator axis or output the laser beam, the deflecting optical elements being arranged at an angle to the path of the beam, characterised in that the four optical elements (18 — 21) direct the laser beam towards the oppositely situated optical element in the manner of a ring laser.

2. Laser arrangement according to claim 1, characterised in that the optical elements (18; 20 and 19; 21) situated diagonally opposite each other enclose the same angle with the path of the beam (Figure 3).

3. Laser arrangement according to claim 1 or claim 2, characterised in that for the use of two or more wave-lengths and with suitably sub-divided electrodes (10 — 14), the optical elements (18 — 21) are arranged to pivot about an axis perpendicular to the horizontal main plane of the apparatus so that each free space between the electrodes is associated with a different wavelength $\lambda$ (Figure 3).

4. Laser arrangement according to any of claims 1 to 3, characterised in that, with the wavelengths comparatively far apart, those surfaces or surface regions of the optical elements (19; 20) which are associated with the corresponding wavelengths $\lambda$ are in the form of grids (17) and have differing grid constants (Figure 3).

5. Laser arrangement according to any of claims 1 to 4, characterised in that the optical elements (18 — 21) are arranged to be exchangeable or replaceable and have a form differing from that of the planar surface according to requirement, e. g. they may have a cylindrical or non-spherical form.

6. Laser arrangement according to any of claims 1 to 5, characterised in that the end faces (8; 9) of the housing (2) are formed as optical elements having totally reflective and/or partially reflective properties and are made of quartz, glass, glass ceramics, ceramics, plastics, germanium, cadmium telluride or zinc selenide.

7. Laser arrangement according to claim 1 or claim 6, characterised in that at least one totally reflective region and one sufficiently transparent region is provided in each case on that side of the housing end wall (8) which faces the resonator (5) or is incorporated in the housing end face which, if required, is formed as a mode diaphragm by limitation of the reflective region.

8. Laser arrangement according to claim 1 or claim 7, characterised in that the totally reflective region is applied by vapour deposition in the form of a reflex layer or comprises a metallic layer, e. g. gold, or of a dielectric layer, while the transparent region comprises a transparent material of low absorption and/or of a complete perforation.

9. Laser arrangement according to any of claims 1 to 8, characterised in that two of the totally reflective optical elements (19; 20) at one end face (9) are in the form of a prismatic block (15) or triple mirror (16) (Figures 4 and 5).

10. Laser arrangement according to claim 9, characterised in that the triple mirror is arranged so that at the end face is has surface regions (16') exposed to the path of the beam and adges (16'') kept away from the path of the beam (Figure 5).

11. Laser arrangement according to any of the claims 1 to 10, characterised in that the optical elements (18 — 21) and/or the end faces (8; 9) which support them are arranged to be displaceably by means of a piezoelectric drive (23) (Figure 1).

12. Laser arrangement according to any of claims 3 to 11, characterised in that a common, optical crystal (22), e. g. of germanium or CdTe, is coupled into the path of two output beams of different wavelengths $\lambda_1$, $\lambda_2$ for producing another beam of different wavelength $\lambda_3$.

## Revendications

1. Dispositif laser, constitué d'un espace résonateur (5) entouré d'un boitier (2), avec un système d'électrodes, qui est divisé en une électrode (11) avec deux surfaces (12, 13) servant à la décharge électrique et deux électrodes extérieures en vis-à-vis de ces surfaces, deux axes de résonance étant définis par cette disposition des électrodes et quatre éléments optiques (18 — 21) étant ainsi prévus, dont au moins un est partiellement transparent, ces éléments déclenchant le rayon laser ou le déviant sur les faces frontales (8, 9) du boitier à la hauteur de l'espace libre entre les électrodes, en direction de chacun des autres axes de résonance, et étant disposés sous un angle par rapport au trajet de rayonnement, caractérisé en ce que chacun des quatre élements optiques (18 — 21) dévie le rayon laser à la façon d'un laser annulaire sur chacun des éléments optiques qui lui est en vis-à-vis.

2. Dispositif laser selon la revendication 1, caractérisé en ce que les éléments optiques en vis-à-vis en diagonale (18, 20 – 19, 21) forment chaque fois le même angle avec le trajet du rayonnement.

3. Dispositif laser selon une des revendications 1 ou 2, caractérisé en ce que, pour une utilisation d'au moins deux longueurs d'onde et avec des électrodes (10 – 14) divisées de façon correspondante, les éléments optiques (18 – 21) sont disposés oscillant autour d'un axe perpendiculaire au plan horizontal principal de l'appareil, de façon telle que chaque espace libre entre les électrodes est affecté à une autre longueur d'onde $\lambda$.

4. Dispositif laser selon une des revendications 1 à 3, caractérisé en ce que les surfaces ou domaines de surfaces des éléments optiques (19, 20) affectés à chacune des longueurs d'onde $\lambda$ sont formées par des grilles (17) pour des longueurs d'ondes comparativement éloignées les unes des autres et sont munies de constantes de grilles différentes.

5. Dispositif laser selon une des revendications 1 à 4, caractérisé en ce que les éléments optiques (18 – 21) sont disposés de façon à être échangeables, et présentent une surface s'écartant de la surface plane en fonction des besoins, par exemple cylindrique ou sphérique.

6. Dispositif laser selon une des revendications 1 à 5, caractérisé en ce que les faces frontales (8, 9) du boitier (2) sont constituées par des éléments optiques avec des propriétés réfléchissantes totalement et/ou partiellement et sont constituées de quartz, verre, verre-céramique, céramique, matière plastique, germanium, tellurure de cadmium, ou seleniure de zinc.

7. Dispositif laser selon une des revendications 1 ou 6, caractérisé en ce qu'au moins un domaine totalement réfléchissant et un domaine suffisamment transparent sont prévus sur la paroi frontale (8) du boitier tournée vers le résonateur (5), ou sont encastrés dans la paroi frontale du boitier qui, selon le besoin, est formée en écran de modes par limitation du domaine réfléchissant.

8. Dispositif laser selon une des revendications 1 ou 7, caractérisé en ce que le domaine totalement réfléchissant est métallisé sous vide en forme d'une couche réfléchissante ou est constitué d'une couche métallique, par exemple de l'or ou une couche diélectrique, tandis que le domaine transparent est constitué par un matériau transparent de moindre absorption et/ou par un trou ouvert.

9. Dispositif laser selon une des revendications 1 à 8, caractérisé en ce que deux des éléments optiques totalement réfléchissants (19, 20) de l'une (9) des faces frontales est réalisée sous forme de bloc prismatique (15) ou de miroir triple (16).

10. Dispositif laser selon la revendication 9, caractérisé en ce que le miroir triple est disposé frontalement avec les domaines (16') plats exposés au rayonnement et avec les arêtes (16'') maintenues en dehors du trajet du rayonnement.

11. Dispositif laser selon une des revendications 1 à 10, caractérisé en ce que les éléments optiques (18 – 21) et/ou les faces frontales (8, 9) leur servant de support sont réalisés déplaçables à l'aide d'un entraînement piézoélectrique.

12. Dispositif laser selon une des revendications 3 à 11, caractérisé en ce que, sur le trajet de rayonnement de deux rayons laser déclenchés de longueurs d'ondes différentes $\lambda_1$, $\lambda_2$, est couplé un cristal optique commun (22) par exemple du germanium ou du CdTe, produisant un autre rayon de longueur d'onde $\lambda_3$ différente.

**Fig. 1**

**Fig. 2**

100 % f. λ1
z.B 85 % f. λ4

100% f. λ2
z.B. 85% f. λ1

100% f. λ4
z.B. 85% λ3

100% f. λ3
z.B. 85% λ2

**Fig. 3**

Modenblende f. λ1
Mittelbezirk z.B. 80% f. λ1

Gitter f. λ1

Modenblende f. λ2
Mittelbezirk z.B. 80% f. λ2

Gitter f. λ2

9;15

**Fig. 4**

16

16'

16"

austretender Strahl — eintretender Strahl

**Fig. 5**